# EUROPEAN PATENT SPECIFICATION

(11) **EP 2 458 857 B1**
(45) Date of publication and mention of the grant of the patent: **06.08.2014**
(21) Application number: 10811191.5
(22) Date of filing: 25.06.2010
(51) Int. Cl.: H04N 21/433, H04N 21/6543, H04N 21/61, H04N 21/858, H04N 21/6332, H04N 21/45

(54) **METHOD AND DEVICE FOR IMPLEMENTING PROGRAM RECORDING AND PLAYING AND SET-TOP BOX**
VERFAHREN UND VORRICHTUNG ZUR IMPLEMENTIERUNG EINER PROGRAMMAUFZEICHNUNG UND -ABSPIELUNG SOWIE SET-TOP-BOX DAFÜR
PROCÉDÉ ET DISPOSITIF DE MISE EN OEUVRE D'UN ENREGISTREMENT ET D'UNE LECTURE DE PROGRAMME ET BOÎTIER DÉCODEUR

(30) Priority: 26.08.2009 CN 200910167157
(43) Date of publication of application: 30.05.2012
(73) Proprietor: ZTE Corporation, Shenzhen, Guangdong 518057 (CN)
(72) Inventor: ZHOU, Peng, Shenzhen City Guangdong Province 518057 (CN); ZHAO, Lei, Shenzhen City Guangdong Province 518057 (CN)
(74) Representative: Novagraaf Technologies
(86) International application number: PCT/CN2010/074539
(87) International publication number: WO 2011/023031

(56) References cited:
- EP-A2- 1 043 672
- WO-A2-2009/093847
- CN-A- 101 257 600
- CN-A- 101 651 822
- CN-Y- 201 001 164
- US-A1- 2008 307 470
- US-A1- 2009 199 237
- "Telecommunications and Internet converged Services and Protocols for Advanced Networking (TISPAN); IPTV Architecture; IPTV functions supported by the IMS subsystem", ETSI DRAFT; 02070-NGN-R3V325_RM, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V3.2.5, 10 August 2009 (2009-08-10), pages 1-185, XP014055482, [retrieved on 2009-08-10]

## Description

### Technical Field

The present invention relates to the field of internet protocol television (IPTV) technology, and in particular, to a set-top box in an IPTV system, and a method and apparatus for implementing program recording and playing.

### Background of the Related Art

IPTV is a video media service, and along with the continuous maturity of the IPTV technology and the development of each service, the value added service of the IPTV enriches the content of the IPTV system platform, and also can enlarge the audience range of the service at the same time, which becomes an income and benefit source as a potential service, thereby the value added service attracts more and more attention of all parties, such as the operators and the service construction. The IPTV not only can provide a rich and colorful electronic program guide page, but also can provide various services, such as video on demand, playing back, personal recording, information browse, game and so on, and has various interactive functions; however, the advertisement user pays more attention to the program experience effect.

At present, in the field of IPTV technology, the effect of real-time recording and customizing the recording content can be implemented in the process of program playing, that is, after the user clicks the play button by using the remote controller, the user can click the record button in real time to implement the recording function when the recording is required according to his/her own requirement, thus adding the interactivity with the user, however, the recording instruction and the playing instruction of the program are two independent message interfaces for notifying the set-top box due to the interactivity, therefore, the existing recording mode has the following disadvantages:
Firstly, the recording interface is unable to be applicable to all the user groups. Since the traditional recording instructions are only triggered by the user to carry out the recording, while the advertisement service generally uses the active pushing and playing mode, that is, both the playing and the recording are actively initiated by the set-top box, and the traditional recording function is unable to satisfy the requirement of the advertisement user, therefore the recording function of the recording instruction for all the advertisement services requires the integration of the playing and recording instructions. Thus, when the advertisement program starts to play for the first time, the set-top box can actively start the recording instruction and perform the real-time recording at the same time. Implementing the synchronization function of the playing and recording can enlarge the IPTV user groups. However, the existing recording and playing functions are unable to satisfy the above requirement.
Secondly, the recording interface is unable to satisfy all the situations. Since the advertisement programs are normally played in the public situation, while the network condition is inferior to family, which generally uses the off-line mode, that is, all the programs are recorded in the local hard disk of the set-top box. The traditional recording function is not applied to the public situation, and if the synchronization function of the playing and recording can be implemented, not only the IPTV service can be promoted and advertised in more situations, but also the constraint of the network can be got rid of.
Thirdly, the traditional recording program is unable to make the integrity of the program recording. Due to the separation of the playing instruction and the recording instruction, no matter how fast the user clicks the record button, the recording is certainly started after the video starts to play, and there certainly will be the data stream (frame) loss in this period of time, together with the high local cost of the advertisement, which causes that the advertisement user pays more attention to the playing quality of the program, especially to the integrity of the program, and thereby it must influence the viewing effect of the user when the frame loss occurs.

The document "Telecommunications and Internet converged Services and Protocols for Advanced Networking (TISPAN); IPTV Architecture; IPTV functions supported by the IMS subsystem", ETSI DRAFT; 02070-NGN-R3V325_RM, EUROPEAN TELECOMMUNICATIONS STANDARDS INSTITUTE (ETSI), SOPHIA-ANTIPOLIS, FRANCE, no. V3.2.5, and the documents US 2008/307470 A1, US 2009/199237 A1, WO 2009/093847 A2 have disclosed the related art.

### Summary of the Invention

The technical problem to be solved by the present invention is to provide a set-top box and a method and apparatus for implementing the program recording and playing in the IPTV system.

In order to solve the above problem, the present invention provides a method for implementing program recording and playing, which is used in an internet protocol television (IPTV) system comprising a service system and a set-top box, comprising:
the service system sending a playing-recording request carrying a recording identifier and request address to the set-top box; and
the set-top box, according to the playing-recording request, judging whether there is a local interface with playing-recording synchronization capability, and if yes, setting interface parameters according to the recording identifier, defining a media playing object for the playing-recording request, allocating corresponding recording resources and playing resources, downloading and starting to play a program from a network side corresponding to the request address, and synchronously recording the program in the background when playing the program.

The method further comprises: the set-top box, after the program playing and recording is completed, storing a local storage address and an index of the synchronously recorded program, and searching and playing the synchronously recorded program through a local program page.

The request address carried in the playing-recording request is a universal resource locator (URL) address; and
the resources allocated by the set-top box for the media playing object comprise resources for playing in a resource pool and resources of decoder for decoding and playing.

The method further comprises: the set-top box, after the synchronous playing and recording is completed, releasing all the resources allocated for the media playing object.

The present invention further provides an apparatus for implementing program recording and playing, which is located in an internet protocol television (IPTV) system, comprising a service system and a set-top box, wherein,
the service system is configured to send a playing-recording request carrying a recording identifier and request address to the set-top box;
the set-top box is configured to, according to the playing-recording request, judge whether there is a local interface with playing-recording synchronization capability, and if yes, set interface parameters according to the recording identifier, define a media playing object for the playing-recording request, allocate corresponding recording resources and playing resources for the media playing object, download and start to play a program from a network side corresponding to the request address, and synchronously record the program in the background when playing the program.

The request address carried in the playing-recording request sent by the service system to the set-top box is a universal resource locator (URL) address;
the resources allocated by the set-top box for the media playing object comprise resources for playing in a resource pool and resources of decoder for decoding and playing;
the set-top box is further configured to, after the program playing and recording is completed, store a local storage address and an index of the synchronously recorded program, and search and play the synchronously recorded program through a local program page.

The service system comprises an electronic program guide (EPG) server and a JavaScript module; wherein, the EPG server is configured to interact with a user, receive an operation instruction of the user, and send the operation instruction of the user to the JavaScript module; and the JavaScript module is configured to, according to the operation instruction, initiated by the user, of the playing-recording request carrying the recording identifier and request address, define a corresponding media playing object and then put into the resource pool for storage, and send the playing-recording request carrying the recording identifier and request address to the set-top box according to the operation instruction of the user.

The present invention further provides a set-top box, which is located in an internet protocol television (IPTV) system comprising a service system and a set-top box, comprising a browser module, a video on demand (VOD) module and a decoding (DEC) module, wherein,
the browser module is configured to, according to a playing-recording request carrying a recording identifier and request address received from the service system, judge whether there is a local interface with playing-recording synchronization capability, and if yes, set interface parameters according to the recording identifier; and allocate resources for a media playing object defined by the service system in the playing-recording request;
the VOD module is configured to, download a program from a network side corresponding to the request address through a set playing-recording interface by using the allocated resources, and start the DEC module to play the program, and synchronously record the program in the background when playing the program;
the DEC module is configured to decode and play the program.

The set-top box further comprises a program management module, configured to automatically generate a recording file and an index file to be stored in a corresponding directory according to a packet identifier (PID) which is incoming from a personal video recorder (PVR) unit of the VOD module and a hard disk path.

The request address carried in the playing-recording request carrying the recording identifier and request address received by the browser module from the service system is a universal resource locator (URL) address.

The VOD module is configured to, when starting the DEC module to play the program, allocate DEC resources of decoding for the program; and when synchronously recording the program in the background, implement a synchronous recording when playing the program through starting a recording synchronization function.

The VOD module is further configured to shut down the resources allocated by the browser module for the media playing object when the playing is finished; and the DEC module is further configured to release the DEC resources of decoding when the playing is finished.

Compared with the existing technology, the method and apparatus for implementing program recording and playing of the present invention implements the synchronization executing function of the recording and playing instruction, thereby ensuring the entire consistency of playing the program and recording the program and ensuring the quality of program recording and remedying a disadvantage that the ordinary recording interface is unable to implement the complete recording. The playing-recording synchronization mode can solve the problem very well, which improves the disadvantage of the current recording technology itself, and at the same time further improves the user experience, thereby promoting the expanding requirement of IPTV service.

### Brief Description of Drawings

FIG. 1 is a schematic diagram of an apparatus for implementing program recording and playing in an IPTV system according to the present invention;
FIG. 2 is a flow chart of a method for implementing program recording and playing in an IPTV system according to the present invention;
FIG. 3 is a flow schematic diagram of an embodiment for implementing program recording and playing in an IPTV system according to the present invention.

### Preferred Embodiments of the Present Invention

In order to make the purpose, the technical scheme and advantage of the present invention more clear, the present invention is further described in detail with reference to the accompanying drawings hereinafter.

The method and apparatus for implementing program recording and playing in the IPTV system of the present invention is mainly aimed at that the advertisement system is unable to implement the recording function without the data loss in the current IPTV system and unable to satisfy the various service requirements of the user, to solve the frame loss situation when recording in the existing technology. The present invention, through setting the interface with playing-recording synchronization capability, synchronously records the program in the background while playing, thereby implementing the playing-recording synchronization, which will not influence the playing effect and can finish the recording at the same time. It ensures the consistency of playing the program and recording the program, and implements the recording without error, to improve the experience effect of the specific user.

The present invention executes a method for playing-recording synchronization in the IPTV system, including the following steps:
the service system sends a playing-recording request carrying the recording identifier and request address to the set-top box;
the set-top box, according to the playing-recording request, judges whether there is a local interface with playing-recording synchronization capability, and if yes, sets interface parameters according to the recording identifier to implement setting the related attribute value of the interface and ensure the recording and playing successfully, defines a media playing object for the playing-recording request, allocates the corresponding resources for the media playing object, downloads a program from a network side corresponding to the request address and plays the program, and synchronously recording the program in the background when starting to play the program.

Furthermore, the set-top box, after the program playing and recording is completed, stores a local storage address and an index of the synchronously recorded program, and searches and plays the synchronously recorded program through a local program page. The request address carried in the playing-recording request is a universal resource locator (URL), such as the hypertext transfer protocol (HTTP) request address; the resources allocated by the set-top box for the media playing object include fixed resources in the resource pool and fixed resources in the decoder.

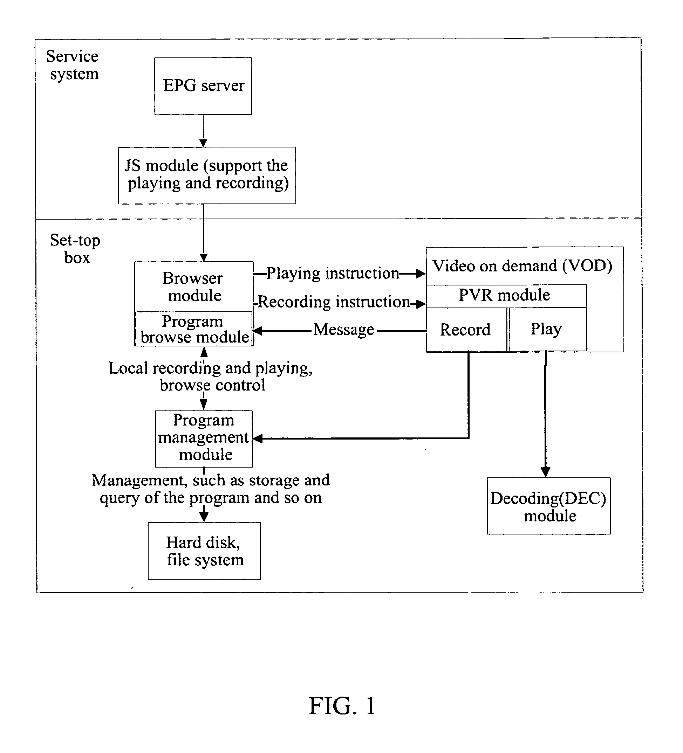

FIG. 1 shows a schematic diagram of an apparatus for implementing program recording and playing in an IPTV system of the present invention. The apparatus includes a service system and a set-top box, wherein, the service system is configured to take charge of the logic control and request of the program playing and recording, for example, what program will be played, whether it is a single recording message instruction or a message instruction of the playing-recording synchronization; the set-top box is configured to take charge of finishing the storage control of recorded program, the online and local media playing, etc.

The service system includes an electronic program guide (EPG) server and a JavaScript module (JS module for short);
the set-top box includes a media server, a browser module, a video on demand (VOD) module, a program management module and a decoding (DEC) module.

Furthermore, as shown in FIG. 1, in the service system:
the electronic program guide (EPG) server is configured to receive an operation instruction of the user, and send the user operation instruction to the JavaScript module;
the JavaScript module is configured to send the signaling, such as the media playing request, the recording request and so on, to the set-top box according to the user operation instruction, and define the media playing object according to the user instruction after receiving the playing and recording command from the user, and call the bottom layer interface of set-top box to carry out playing and recording, and also configured to notify the browser module to allocate resources for the media playing object, generate the playing-recording request carrying the recording identifier and request address, and send the request to the set-top box in the present invention.

Furthermore, as shown in FIG. 1, in the set-top box:
the browser module is configured to allocate fixed resources for the media playing object defined by the JavaScript module, and send a channel playing command received from the network side to the JavaScript module; add the personal video recorder (PVR) support function, and support the setting interface and the capability judgment interface, and provide a frame of transmitting the message and executing the command; after receiving the notification of the JavaScript module, call the VOD module and the DEC module to allocate the media playing controller and the media decoding displayer for the media stream of the channel;
the VOD module is configured to take charge of the media playing and recording control, and implement the playing, shutting and pause control for the received media stream of the channel, and in the playing status, send the received media stream of the channel to the media decoding displayer allocated for the channel;
the program management module is configured to finish the management functions, such as the storage and query of the program information, etc. The information which requires managing includes the program information of the reserved program, downloaded program and recorded program. The specific access control is implemented by providing the information storage access interface of the program for the upper layer and using the interface of hard disk file system for the lower layer.

The DEC module is configured to take charge of the decoding and display, decode the received media stream of the channel, and play the decoded media stream.

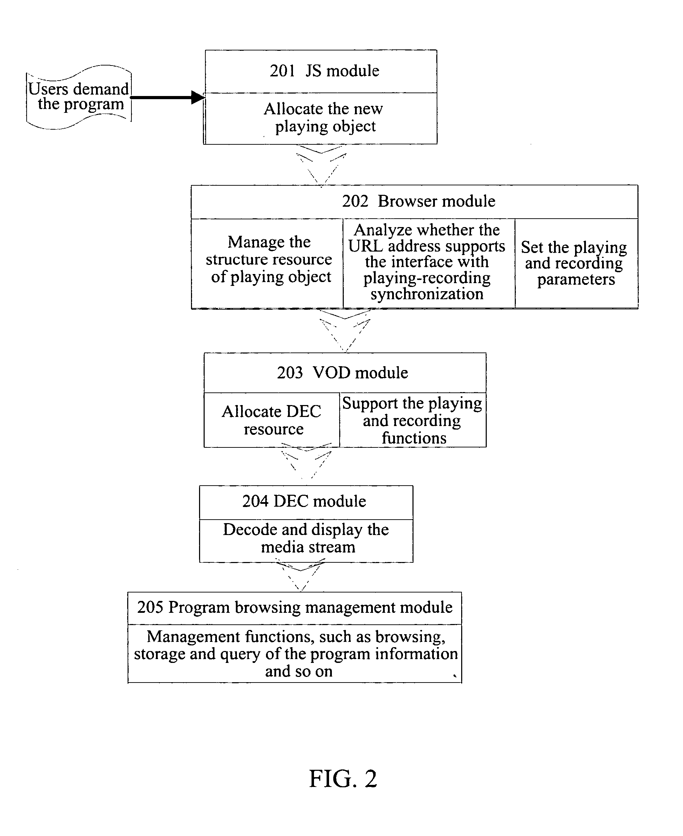

FIG. 2 is a function diagram of each module of an apparatus for implementing playing-recording synchronization in an IPTV system of the present invention, including:
201, the JavaScript module, according to the HTTP request carrying the recording identifier initiated by user, defines the corresponding media playing obj ect and then puts into the resource pool for storage.
202, the browser module will allocate a fixed resource for the media playing obj ect defined by the JavaScript module in the resource pool, and analyze the URL for the fixed resource in the VOD corresponding to each resource, which is used for judging whether the set-top box has the interface supporting playing-recording synchronization; and in the case of supporting the calling of the synchronization interface, the setting interface is called at the same time to set the recording related attribute according to the recording identifier, or else, it is directly determined by the VOD module to start the playing.
203, the VOD module, when starting the program playing according to the information set by the browser, allocates a DEC resource for the program and starts the recording synchronization function.
204, the DEC module decodes the received program data and plays the decoded media stream. It releases the DEC resource after the playing is finished.
205, the program browsing management module, according to a incoming packet identifier (PID) and a hard disk path, automatically generates a recording file and an index file to be stored in a corresponding directory, and finishes the management functions, such as browsing, storage and query of the program information, etc.

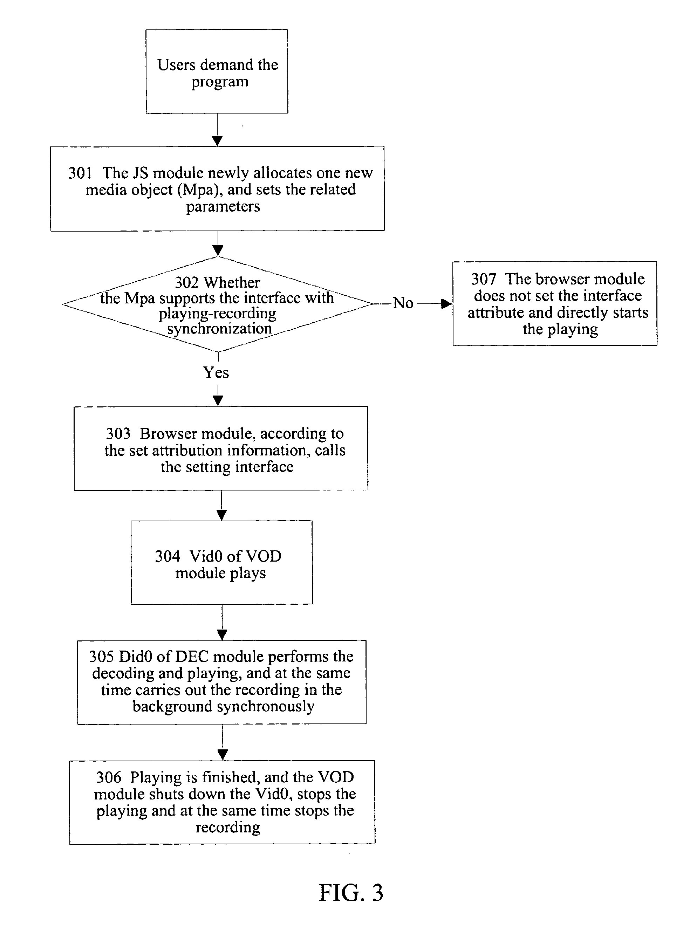

FIG. 3 is a flow chart of a method embodiment for implementing playing-recording synchronization in an IPTV system of the present invention, comprising:
301, the JavaScript module initiates a program playing-recording request carrying the recording identifier and HTTP address, and allocates one new media object (mediaplayer, Mpa for short), and sets the related parameters.
302, analyze the URL address and judge whether the Mpa has the interface supporting playing-recording synchronization; if not, then directly proceed to 307; if yes, then proceed to 303.
303, the browser module, according to the information in the recording identifier, calls the setting function (such as a set function) to set the attribute information of interface, and allocates one new fixed resource Vid0.
304, the Vid0 of the VOD module starts the playing-recording synchronization instruction, and at the same time allocates one Did0 resource for the DEC module.
305, the Did0 of the DEC module performs the decoding and playing, and synchronously records the program in the background.
306, the playing is finished, and the VOD module shuts down the Vid0; the DEC releases the Did0 resource, stops the playing and meanwhile stops the recording.
307, the browser module only allocates the new fixed resource Vid0, but it does not set the interface attribute, and starts the playing directly.

Based on the above method and apparatus for implementing playing-recording synchronization, a set-top box using the method also can be provided, of which the structure is shown in FIG. 1, and the set-top box includes:
the browser module is configured to allocate fixed resources for the media playing object defined by the JavaScript module, and send a channel playing command received from the network side to the JavaScript module; add the personal video recorder (PVR) support function, and support the setting interface and the capability judgment interface, and provide a frame of transmitting the message and executing the command; after receiving the notification of the JavaScript module, call the VOD module and the DEC module to allocate the media playing controller and the media decoding displayer for the media stream of the channel;
the VOD module is configured to take charge of the media playing and recording control, and implement the playing, shutting and pause control for the received media stream of the channel, and in the playing status, send the received media stream of the channel to the media decoding displayer allocated for the channel;
the program management module is configured to finish the management functions, such as the storage and query of the program information, etc. The information which requires managing includes the program information of the reserved program, downloaded program and recorded program. The specific access control is implemented by providing the information storage access interface of the program for the upper layer and using the interface of hard disk file system for the lower layer.

The DEC module is configured to take charge of the decoding and display, decode the received media stream of the channel, and play the decoded media stream.

Through the technical scheme of the present invention, the playing and recoding functions are further improved on the basis of the original recording function, which is able to carry out the recording synchronously when playing and able to achieve the recording effect without data loss, thereby improving the experience of advertisement user largely, and further promoting the development of the IPTV service in the case of enlarging the user groups.

The above description is only the embodiments of the present invention and is not intended to limit the present invention. There is a variety of modifications and variations in the present invention for those skilled in the art.

### Industrial Applicability

The method and apparatus for implementing program recording and playing in the present invention implements the synchronization executing function of the recording and playing instruction, thereby ensuring the entire consistency of playing the program and recording the program and ensuring the quality of program recording and remedying a disadvantage that the ordinary recording interface is unable to implement the complete recording. The playing-recording synchronization mode can solve the problem very well, which improves the disadvantage of the current recording technology itself, and at the same time further improves the user experience, thereby promoting the expanding requirement of IPTV service.

## Claims

1. A method for implementing program recording and playing, which is used in an internet protocol television (IPTV) system comprising a service system and a set-top box, **characterized by** comprising:
the service system sending a playing-recording request carrying a recording identifier and request address to the set-top box; and
the set-top box, according to the playing-recording request, judging whether there is a local interface with playing-recording synchronization capability (302), and if yes, setting interface parameters according to the recording identifier, defining a media playing object for the playing-recording request, allocating corresponding recording resources and playing resources (303, 304), downloading and starting to play a program from a network side corresponding to the request address, and synchronously recording the program in background when playing the program (305).

2. The method according to claim 1, further comprising:
the set-top box, after playing and recording of the program is completed, storing a local storage address and an index of the synchronously recorded program, and searching and playing the synchronously recorded program through a local program page.

3. The method according to claim 1 or 2, wherein,
the request address carried in the playing-recording request is a universal resource locator (URL) address;
resources allocated by the set-top box for the media playing object comprise resources for playing in a resource pool and resources of decoder for decoding and playing.

4. The method according to claim 3, further comprising:
the set-top box, after synchronous playing and recording is completed, releasing all the resources allocated for the media playing object (306).

5. An apparatus for implementing program recording and playing, which is located in an internet protocol television (IPTV) system, comprising a service system and a set-top box, **characterized in that**
the service system is configured to send a playing-recording request carrying a recording identifier and request address to the set-top box;
the set-top box is configured to, according to the playing-recording request, judge whether there is a local interface with playing-recording synchronization capability, and if yes, set interface parameters according to the recording identifier, define a media playing object for the playing-recording request, allocate corresponding recording resources and playing resources for the media playing object, download and start to play a program from a network side corresponding to the request address, and synchronously record the program in background when playing the program.

6. The apparatus according to claim 5, wherein,
the request address carried in the playing-recording request sent by the service system to the set-top box is a universal resource locator (URL) address;
resources allocated by the set-top box for the media playing object comprise resources for playing in a resource pool and resources of decoder for decoding and playing;
the set-top box is further configured to, after playing and recording of the program is completed, store a local storage address and an index of the synchronously recorded program, and search and play the synchronously recorded program through a local program page.

7. The apparatus according to claim 5 or 6, wherein, the service system comprises an electronic program guide (EPG) server and a JavaScript module (201); wherein,
the EPG server is configured to interact with a user, receive an operation instruction of the user, and send the operation instruction of the user to the JavaScript module (201);
the JavaScript module (201) is configured to, according to the operation instruction of the playing-recording request carrying the recording identifier and request address initiated by the user, define a corresponding media playing object and then put into the resource pool for storage, and send the playing-recording request carrying the recording identifier and request address to the set-top box according to the operation instruction of the user.

8. A set-top box, which is located in an internet protocol television (IPTV) system comprising a service system and a set-top box, **characterized by** comprising a browser module (202), a video on demand (VOD) module (203) and a decoding (DEC) module (204), wherein,
the browser module (202) is configured to, according to a playing-recording request carrying a recording identifier and request address received from the service system, judge whether there is a local interface with playing-recording synchronization capability, and if yes, set interface parameters according to the recording identifier; and to allocate resources for a media playing object defined by the service system in the playing-recording request;
the VOD module (203) is configured to, download a program from a network side corresponding to the request address through a set playing-recording interface by using the allocated resources, and start the DEC module (204) to play the program, and synchronously record the program in background when playing the program;
the DEC module (204) is configured to decode and play the program.

9. The set-top box according to claim 8, further comprising:
a program management module, configured to automatically generate a recording file and an index file to be stored in a corresponding directory according to a packet identifier (PID) which is incoming from a personal video recorder (PVR) unit of the VOD module (203) and a hard disk path.

10. The set-top box according to claim 8 or 9, wherein,
the request address carried in the playing-recording request carrying the recording identifier and request address received by the browser module (202) from the service system is a universal resource locator (URL) address.

11. The set-top box according to claim 8 or 9, wherein,
the VOD module (203) is configured to, when starting the DEC module (204) to play the program, allocate DEC resources of decoding for the program; and when synchronously recording the program in the background, implement a synchronous recording when playing the program through starting a recording synchronization function.

12. The set-top box according to claim 11, wherein,
the VOD module (203) is further configured to shut down the resource allocated by the browser module (202) for the media playing object when playing is finished;
the DEC module (204) is further configured to release the DEC resources of decoding when the playing is finished.

## Patentansprüche

1. Verfahren zum Umsetzen des Aufzeichnens und Wiedergebens von Programmen, das in einem Internetprotokoll-Fernseh- (IPTV) System verwendet wird, das ein Dienstsystem und eine Set-Top-Box umfasst, **dadurch gekennzeichnet, dass** es folgende Schritte umfasst:
das Dienstsystem sendet eine Wiedergabe-/Aufzeichnungsanfrage, die eine Aufzeichnungskennung und eine Anfragenadresse enthält, an die Set-Top-Box; und
gemäß der Wiedergabe-/Aufzeichnungsanfrage beurteilt die Set-Top-Box, ob eine lokale Schnittstelle mit Fähigkeit zum Synchronisieren der Wiedergabe/Aufzeichnung (302) vorliegt, und wenn ja, Schnittstellenparameter gemäß der Aufzeichnungskennung einstellt, ein Medienwiedergabeobjekt für die Wiedergabe-/Aufzeichnungsanfrage definiert, entsprechende Aufzeichnungsressourcen und Wiedergaberessourcen (303, 304) zuteilt, ein Programm von einer Netzwerkseite, die der Anfrageadresse entspricht, herunterlädt und beginnt, dieses wiederzugeben, und das Programm im Hintergrund synchron aufzeichnet, wenn das Programm (305) wiedergegeben wird.

2. Verfahren nach Anspruch 1, ferner umfassend folgenden Schritt:
nachdem das Wiedergeben und Aufzeichnen des Programms beendet ist, speichert die Set-Top-Box eine lokale Speicheradresse und einen Index des synchron aufgezeichneten Programms und sucht das synchron aufgezeichnete Programm über eine lokale Programmseite und gibt es wieder.

3. Verfahren nach Anspruch 1 oder 2, wobei
die Anfrageadresse, die in der Wiedergabe-/Aufzeichnungsanfrage enthalten ist, eine universelle Quellenlokalisierer- (URL) Adresse ist;
Ressourcen, die von der Set-Top-Box für das Medienwiedergabeobjekt zugeteilt werden, Ressourcen zum Wiedergeben in einem Ressourcen-Pool und Ressourcen eines Decodierers zum Decodieren und Wiedergeben umfassen.

4. Verfahren nach Anspruch 3, ferner umfassend folgenden Schritt:
nachdem das synchrone Wiedergeben und Aufzeichnen beendet sind, gibt die Set-Top-Box alle Ressourcen frei, die für das Medienwiedergabeobjekt (306) zugeteilt wurden.

5. Gerät zum Umsetzen des Aufzeichnens und Wiedergebens von Programmen, das sich in einem Internetprotokoll-Fernseh- (IPTV) System befindet, umfassend ein Dienstsystem und eine Set-Top-Box, **dadurch gekennzeichnet, dass**
das Dienstsystem konfiguriert ist, um eine Wiedergabe-/Aufzeichnungsanfrage, die eine Aufzeichnungskennung und eine Anfragenadresse enthält, an die Set-Top-Box zu senden; und
die Set-Top-Box konfiguriert ist, um gemäß der Wiedergabe-/Aufzeichnungsanfrage zu beurteilen, ob eine lokale Schnittstelle mit Fähigkeit zum Synchronisieren der Wiedergabe/Aufzeichnung vorliegt, und wenn ja, Schnittstellenparameter gemäß der Aufzeichnungskennung einstellt, ein Medienwiedergabeobjekt für die Wiedergabe-/Aufzeichnungsanfrage definiert, entsprechende Aufzeichnungsressourcen und Wiedergaberessourcen zuteilt, ein Programm von einer Netzwerkseite, die der Anfrageadresse entspricht, herunterlädt und beginnt, dieses wiederzugeben, und das Programm im Hintergrund synchron aufzeichnet, wenn das Programm wiedergegeben wird.

6. Gerät nach Anspruch 5, wobei
die Anfrageadresse, die in der Wiedergabe-/Aufzeichnungsanfrage enthalten ist, eine universelle Quellenlokalisierer- (URL) Adresse ist;
Ressourcen, die von der Set-Top-Box für das Medienwiedergabeobjekt zugeteilt werden, Ressourcen zum Wiedergeben in einem Ressourcen-Pool und Ressourcen eines Decodierers zum Decodieren und Wiedergeben umfassen;
die Set-Top-Box ferner konfiguriert ist, nachdem das Wiedergeben und Aufzeichnen des Programms beendet sind, um eine lokale Speicheradresse und einen Index des synchron aufgezeichneten Programms zu speichern und das synchron aufgezeichnete Programm über eine lokale Programmseite zu suchen und wiederzugeben.

7. Gerät nach Anspruch 5 oder 6, wobei das Dienstsystem einen Server für einen elektronischen Programmführer (EPG) und ein JavaScript-Modul (201) umfasst; wobei
der EPG-Server konfiguriert ist, um mit einem Benutzer zu interagieren, eine Bedienungsanweisung des Benutzers zu empfangen und die Bedienungsanweisung des Benutzers an das JavaScript-Modul (201) zu senden;
das JavaScript-Modul (201) konfiguriert ist, um gemäß der Bedienungsanweisung der Wiedergabe-/Aufzeichnungsanfrage, welche die Aufzeichnungskennung und die Anfrageadresse, die von dem Benutzer eingeleitet wird, enthält, ein entsprechendes Medienwiedergabeobjekt zu definieren und dann in den Ressourcen-Pool zur Speicherung zu legen und die Wiedergabe-/Aufzeichnungsanfrage, welche die Aufzeichnungskennung und die Anfrageadresse enthält, an die Set-Top-Box gemäß der Bedienungsanweisung des Benutzers zu senden.

8. Set-Top-Box, die sich in einem Internetprotokoll-Fernseh- (IPTV) System befindet, das ein Dienstsystem und eine Set-Top-Box umfasst, **dadurch gekennzeichnet, dass** sie ein Navigationsmodul (202), ein Video-auf-Anfrage- (VOD) Modul (203) und ein Decodierungs- (DEC) Modul (204) umfasst, wobei
das Navigationsmodul (202) konfiguriert ist, um gemäß einer Wiedergabe-/Aufzeichnungsanfrage, die eine Aufzeichnungskennung und eine Anfrageadresse enthält, die von dem Dienstsystem empfangen wird, zu beurteilen, ob eine lokale Schnittstelle mit der Fähigkeit zum Synchronisieren der Wiedergabe/Aufzeichnung vorliegt, und wenn ja, Schnittstellenparameter gemäß der Aufzeichnungskennung einzustellen; und um Ressourcen für ein Medienwiedergabeobjekt zuzuteilen, das durch das Dienstsystem in der Wiedergabe-/Aufzeichnungsanfrage definiert wird;
das VOD-Modul (203) konfiguriert ist, um ein Programm von einer Netzwerkseite, die der Anfrageadresse entspricht, über eine eingestellte Wiedergabe-/Aufzeichnungsschnittstelle unter Verwendung der zugeteilten Ressourcen herunterzuladen, und das DEC-Modul (204) zu starten, um das Programm wiederzugeben, und das Programm im Hintergrund synchron aufzuzeichnen, wenn das Programm wiedergegeben wird;
das DEC-Modul (204) konfiguriert ist, um das Programm zu decodieren und wiederzugeben.

9. Set-Top-Box nach Anspruch 8, ferner umfassend: ein Programmverwaltungsmodul, das konfiguriert ist, um automatisch eine Aufzeichnungsdatei und eine Indexdatei zu generieren, die in einem entsprechenden Verzeichnis gemäß einer Paketkennung (PID), die von einer persönlichen Videorecorder- (PVR) Einheit des VOD-Moduls (203) ankommt, und einem Festplattenpfad zu speichern sind.

10. Set-Top-Box nach Anspruch 8 oder 9, wobei
die Anfrageadresse, die in der Wiedergabe-/Aufzeichnungsanfrage enthalten ist, welche die Aufzeichnungskennung und die Anfrageadresse enthält, die durch das Navigationsmodul (202) von dem Dienstsystem empfangen wird, eine universelle Quellenlokalisier- (URL) Adresse ist.

11. Set-Top-Box nach Anspruch 8 oder 9, wobei
das VOD-Modul (203) konfiguriert ist, wenn das DEC-Modul (204) gestartet wird, um das Programm wiederzugeben, DEC-Ressourcen zum Decodieren für das Programm zuzuteilen; und wenn das Programm im Hintergrund synchron aufgezeichnet wird, um eine synchrone Aufzeichnung, wenn das Programm wiedergegeben wird, durch Starten einer Aufzeichnungssynchronisationsfunktion umzusetzen.

12. Set-Top-Box nach Anspruch 11, wobei
das VOD-Modul (203) ferner konfiguriert ist, um die Ressource auszuschalten, die von dem Navigationsmodul (202) für das Medienwiedergabeobjekt zugeteilt wird, wenn die Wiedergabe beendet ist;
das DEC-Modul (204) ferner konfiguriert ist, um die DEC-Ressourcen des Decodierens freizugeben, wenn die Wiedergabe beendet ist.

## Revendications

1. Procédé de mise en ouvre de l'enregistrement et de la lecture de programmes, qui est utilisé dans un système de télévision par Internet (IPTV) comprenant un système de service et un décodeur, **caractérisé en ce qu'**il comprend :
l'envoi, par le système de service, d'une requête de lecture-enregistrement contenant un identifiant d'enregistrement et une adresse de requête au décodeur ; et
la détermination par le décodeur, en fonction de la requête de lecture-enregistrement, du fait qu'il existe ou pas une interface locale dotée d'une capacité de synchronisation lecture-enregistrement (302), et si oui, la définition des paramètres d'interface en fonction de l'identifiant d'enregistrement, la définition d'un objet de lecture multimédia pour la requête de lecture-enregistrement, l'attribution des ressources d'enregistrement et des ressources de lecture correspondantes (303, 304), le téléchargement et le démarrage de la lecture d'un programme d'un côté réseau correspondant à l'adresse de requête, et l'enregistrement de manière synchrone du programme en arrière-plan tout en lisant le programme (305).

2. Procédé selon la revendication 1, comprenant en outre :
le stockage par le décodeur, une fois que la lecture et l'enregistrement du programme sont terminés, d'une adresse locale de stockage et d'un index du programme enregistré de manière synchrone, et la recherche et la lecture du programme enregistré de manière synchrone dans une page de programmes locale.

3. Procédé selon la revendication 1 ou 2, dans lequel,
l'adresse de requête contenue dans la requête de lecture-enregistrement est une adresse universelle de ressource (URL) ;
les ressources affectées par le décodeur pour l'objet de lecture multimédia comprennent des ressources de lecture et des ressources d'un décodeur pour décoder et lire.

4. Procédé selon la revendication 3, comprenant en outre :
la libération par le décodeur, une fois que la lecture et l'enregistrement synchrones sont terminés, de toutes les ressources affectées pour l'objet de lecture multimédia (306).

5. Dispositif de mise en oeuvre de l'enregistrement et de la lecture de programmes, qui se trouve dans un système de télévision par Internet (IPTV), comprenant un système de service et un décodeur, **caractérisé en ce que**
le système de service est configuré pour envoyer une requête de lecture-enregistrement contenant un identifiant d'enregistrement et une adresse de requête au décodeur ;
le décodeur est configuré, en fonction de la requête de lecture-enregistrement, pour déterminer s'il existe une interface locale dotée d'une capacité de synchronisation lecture-enregistrement, et si oui, pour définir des paramètres d'interface en fonction de l'identifiant d'enregistrement, définir un objet de lecture multimédia pour la requête de lecture-enregistrement, affecter les ressources d'enregistrement et les ressources de lecture correspondantes pour l'objet de lecture multimédia, télécharger et commencer à lire un programme d'un côté réseau correspondant à l'adresse de la requête, et enregistrer de manière synchrone le programme en arrière-plan tout en lisant le programme.

6. Dispositif selon la revendication 5, dans lequel,
l'adresse de requête contenue dans la requête de lecture-enregistrement envoyée par le système de service au décodeur est une adresse universelle de ressource (URL) ;
les ressources affectées par le décodeur pour l'objet de lecture multimédia comprennent des ressources pour lire dans un groupe de ressources et des ressources d'un décodeur pour décoder et lire ;
le décodeur est configuré en outre, une fois que la lecture et l'enregistrement du programme sont terminés, pour stocker une adresse locale de stockage et un index du programme enregistré de manière synchrone, et pour rechercher et lire le programme enregistré de manière synchrone dans une page de programmes locale.

7. Dispositif selon la revendication 5 ou 6, dans lequel le système de service comprend un serveur de guide électronique de programme (EPG) et un module JavaScript (201) ; dans lequel,
le serveur EPG est configuré pour interagir avec un utilisateur, recevoir une instruction d'opération de l'utilisateur, et envoyer l'instruction d'opération de l'utilisateur au module JavaScript (201) ;
le module JavaScript (201) est configuré, selon l'instruction d'opération de la requête de lecture-enregistrement contenant l'identifiant d'enregistrement et l'adresse de requête lancée par l'utilisateur, pour définir un objet de lecture multimédia correspondant et le mettre ensuite dans le groupe de ressources pour stockage, et pour envoyer la requête de lecture-enregistrement contenant l'identifiant d'enregistrement et l'adresse de requête au décodeur selon l'instruction d'opération de l'utilisateur.

8. Décodeur qui se trouve dans un système de télévision par Internet (IPTV) comprenant un système de service et un décodeur, **caractérisé en ce qu'**il comprend un module de navigation (202), un module de vidéo à la demande (VOD) (203) et un module de décodage (DEC) (204), dans lequel,
le module de navigation (202) est configuré, en fonction d'une requête de lecture-enregistrement contenant un identifiant d'enregistrement et une adresse de requête reçue du système de service, pour déterminer s'il existe une interface locale dotée d'une capacité de synchronisation lecture-enregistrement, et si oui, pour définir des paramètres d'interface en fonction de l'identifiant d'enregistrement ; et pour affecter des ressources pour un objet de lecture multimédia défini par le système de service dans la requête de lecture-enregistrement ;
le module VOD (203) est configuré pour télécharger un programme d'un côté réseau correspondant à l'adresse de la requête au travers d'une interface de lecture-enregistrement définie en utilisant les ressources affectées, et lancer le module DEC (204) pour lire le programme, et enregistrer de manière synchrone le programme en arrière-plan tout en lisant le programme ;
le module DEC (204) est configuré pour décoder et lire le programme.

9. Décodeur selon la revendication 8, comprenant en outre :
un module de gestion de programme, configuré pour créer automatiquement un fichier d'enregistrement et un fichier d'index destinés à être stockés dans un répertoire correspondant selon un identifiant de paquet (PID) qui provient d'une unité d'enregistrement vidéo personnelle (PVR) du module VOD (203) et un chemin de disque dur.

10. Décodeur selon la revendication 8 ou 9, dans lequel
l'adresse de requête contenue dans la requête de lecture-enregistrement contenant l'identifiant d'enregistrement et l'adresse de requête reçue par le module de navigation (202) en provenance du système de service est une adresse universelle de ressource (URL).

11. Décodeur selon la revendication 8 or 9, dans lequel
le module VOD (203) est configuré, lorsqu'il lance le module DEC (204) pour lire le programme, pour affecter des ressources DEC de décodage pour le programme ; et lorsqu'il enregistre de manière synchrone le programme en arrière-plan, pour mettre en oeuvre un enregistrement synchrone tout en lisant le programme en lançant une fonction de synchronisation d'enregistrement.

12. Décodeur selon la revendication 11, dans lequel
le module VOD (203) est configuré en outre pour fermer la ressource affectée par le module de navigation (202) pour l'objet de lecture multimédia lorsque la lecture est finie ;
le module DEC (204) est configuré en outre pour libérer les ressources DEC de décodage lorsque la lecture est finie.
